# FASCICULE DE BREVET EUROPEEN

(11) **EP 2 630 014 B1**
(45) Date de publication et mention de la délivrance du brevet: **28.02.2018**
(21) Numéro de dépôt: 11787720.9
(22) Date de dépôt: 19.10.2011
(51) Int. Cl.: B60T 8/1755, B60T 1/10, B60W 30/18

(54) **PROCÉDÉ ET SYSTEME DE FREINAGE D'UN VÉHICULE AUTOMOBILE A TRACTION ÉLECTRIQUE OU HYBRIDE**
BREMSVERFAHREN UND SYSTEM FÜR EIN KRAFTFAHRZEUG MIT HYBRID- ODER ELEKTROANTRIEB
BRAKING METHOD AND SYSTEM FOR A HYBRID OR ELECTRICALLY POWERED MOTOR VEHICLE

(30) Priorité: 19.10.2010 FR 1058539
(43) Date de publication de la demande: 28.08.2013
(73) Titulaire: Renault S.A.S., 92100 Boulogne-Billancourt (FR)
(72) Inventeur: AZZI, Hamid, F-78310 Maurepas (FR); POTHIN, Richard, F-78760 Jouars-pontchartrain (FR)
(86) Numéro de dépôt international: PCT/FR2011/052440
(87) Numéro de publication internationale: WO 2012/052682

(56) Documents cités:
- WO-A1-2009/077835
- DE-A1-102007 056 359
- DE-A1-102008 001 455
- US-A1- 2010 094 511

## Description

L'invention concerne un procédé et un système de freinage de véhicules automobile à traction électrique ou hybride, et plus particulièrement les procédés et systèmes de freinage découplés de véhicules automobiles à traction électrique ou hybride.

On entend par freinage découplé, un freinage pour lequel il n'existe pas de lien mécanique direct entre la pédale de frein et l'organe de freinage.

Contrairement à un système de freinage conventionnel, un système de freinage découplé permet donc de dissocier l'action du conducteur sur la pédale de frein de la décélération réellement réalisée.

En outre, dans un véhicule à traction électrique ou hybride, le freinage peut être réalisé par un actionneur de freinage, par exemple hydraulique, ou par l'actionneur de traction électrique qui, en mode régénératif, permet une récupération d'énergie électrique pouvant être stockée dans les batteries, ce qui accroît l'autonomie du véhicule à traction électrique ou hybride.

Par ailleurs, des dispositifs de contrôle de la stabilité des véhicules automobiles sont connus.

Toutefois, le freinage régénératif peut entraîner des problèmes de stabilité du véhicule, notamment lors des freinages d'urgence. Il est alors connu, par exemple par les documents KR20090043126 et US20060220453, des modules de stabilité d'un véhicule automobile où la fonction de récupération d'énergie est désactivée uniquement en situation de régulation d'anti-blocage des freins (ABS).

Le document WO200837347 décrit un module de stabilité qui désactive la fonction de récupération d'énergie en fonction d'un système électronique de contrôle de la stabilité du véhicule.

On pourra également se référer au document EP2055589 qui décrit un procédé de récupération d'énergie qui ne prend pas en compte la stabilité du véhicule.

Il a également été proposé, dans le document US20050200197, de calculer le couple de freinage, et ce dans un système fonctionnant en boucle ouverte et en utilisant des courbes prédéfinies.

Le document US6155365 décrit un procédé de freinage théorique qui ne prend pas en compte la stabilité du véhicule.

Le document WO 2009077835 Al décrit un procédé de freinage d'un véhicule automobile selon le préambule de la revendication indépendante 1.

Au vu de ce qui précède, la présente invention a pour but de palier au moins en partie les inconvénients procurés par les techniques antérieures et, en particulier, de permettre de gérer la stabilité, la récupération d'énergie et le freinage d'un véhicule automobile.

Selon un premier aspect, il est donc proposé un procédé de freinage d'un véhicule automobile équipé d'un système de traction électrique ou hybride, et comportant un système de freinage hydraulique, un système de freinage électrique permettant la récupération d'énergie électrique, une pédale de frein, des systèmes d'aide à la conduite du véhicule et un système électronique de contrôle de la stabilité du véhicule.

Le procédé comprend les étapes suivantes :
- détermination d'une consigne de couple de la pédale relative à la position ou l'effort exercé sur la pédale de frein,
- détermination d'une consigne de couple relative aux systèmes d'aide à la conduite, lesdits systèmes d'aide à la conduite incluant un régulateur de vitesse adaptatif générant l'une des consignes de couple,
- sélection d'une des consignes de couple entre une consigne de couple de la pédale de frein relative à la position ou l'effort exercé sur la pédale de frein et une consigne de couple relative aux systèmes d'aide à la conduite,
- élaboration d'une consigne de couple de freinage hydraulique indépendante de l'état de la pédale par le système de traction électrique ou hybride,
- acquisition d'informations relatives à la stabilité du véhicule,
- élaboration d'une consigne de couple de freinage hydraulique et d'une consigne de couple de freinage électrique destinée au système de traction électrique ou hybride à partir de la consigne de couple sélectionnée, de la consigne de couple de freinage hydraulique indépendante et des informations relatives à la stabilité du véhicule.

Ainsi, le procédé élabore des consignes de couple de freinage hydraulique et des consignes de couple de freinage électrique de manière à gérer la stabilité du véhicule, la récupération d'énergie et le freinage du véhicule.

Avantageusement, on élabore une consigne de freinage d'urgence destinée au système électronique de contrôle de la stabilité du véhicule à partir des informations relatives à la position ou l'effort exercé sur la pédale de frein.

En outre, la sélection de l'une des consignes de couple entre la consigne de couple de la pédale de frein et la consigne de couple relative aux systèmes d'aide à la conduite comprend la sélection de la valeur de consigne la plus élevée.

Selon un autre aspect, il est proposé un véhicule automobile comprenant un système de traction électrique ou hybride, un système de freinage hydraulique, un système de freinage électrique permettant la récupération d'énergie électrique, une pédale de frein, des systèmes d'aide à la conduite du véhicule, un système électronique de contrôle de la stabilité du véhicule, et une unité de contrôle électronique.

L'unité de contrôle électronique comprend :
- des moyens de détermination d'une consigne de couple de la pédale relative à la position ou l'effort exercé sur la pédale de frein,
- des moyens de détermination d'une consigne de couple relative aux systèmes d'aide à la conduite incluant un régulateur de vitesse adaptatif générant l'une des consignes de couple,
- des moyens de sélection d'une des consignes de couple entre une consigne de couple de la pédale de frein relative à la position ou à l'effort exercé sur la pédale de frein et une consigne de couple relative aux systèmes d'aide à la conduite,
- des moyens d'élaboration d'une consigne de couple de freinage hydraulique indépendante de l'état de la pédale par le système de traction électrique ou hybride,
- des moyens d'acquisition d'informations relatives à la stabilité du véhicule,
- des moyens d'élaboration d'une consigne de couple de freinage hydraulique et d'une consigne de couple de freinage électrique destinée au système de traction électrique ou hybride à partir de la consigne de couple sélectionnée, de la consigne de couple de freinage hydraulique indépendante et des informations relatives à la stabilité du véhicule.

L'unité de contrôle électronique peut comprendre des moyens d'élaboration d'une consigne de freinage d'urgence destinée au système électronique de contrôle de la stabilité du véhicule à partir des informations relatives à la position ou l'effort exercé sur la pédale de frein.

D'autres avantages et caractéristiques de l'invention apparaîtront à l'étude de la description suivante, prise à titre d'exemple non limitatif et illustrée par les dessins annexés sur lesquels :
- la figure 1 illustre schématiquement un système de freinage découplé ;
- la figure 2 illustre les différentes étapes d'un procédé de freinage selon l'invention ; et
- la figure 3 illustre les différentes étapes d'un autre mode de mise en oeuvre de l'invention.

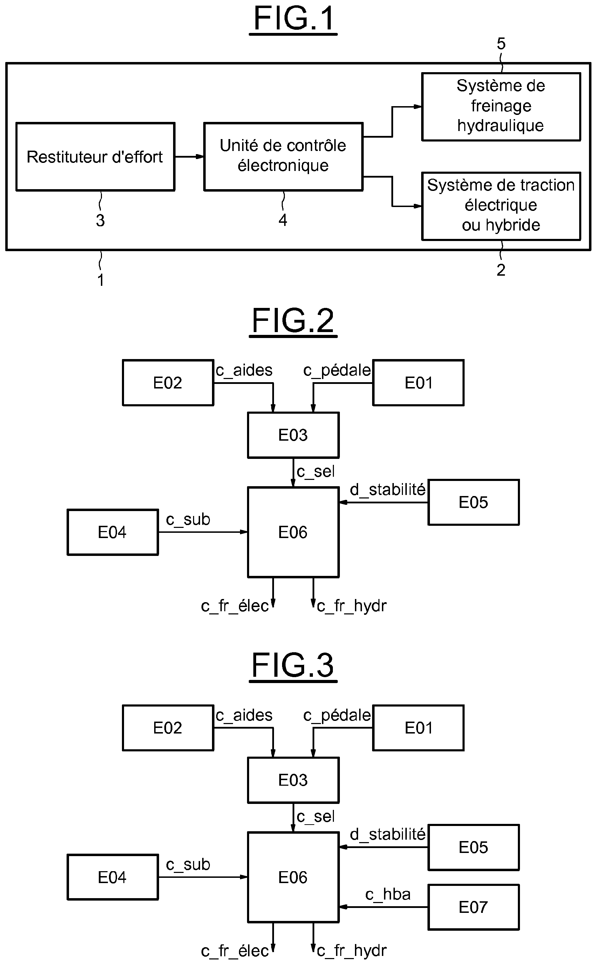

Sur la figure 1 on a représenté de manière schématique un véhicule automobile 1, qui comprend un système de traction électrique ou hybride 2 apte à récupérer de l'énergie électrique lors d'un freinage électrique.

Le véhicule automobile 1 est également équipé d'une pédale de frein et elle est reliée à un restituteur d'effort 3 apte à recueillir des informations relatives à la position ou à l'effort exercé par le conducteur sur la pédale. Le restituteur 3 transforme les informations qu'il reçoit en signaux électriques.

Le restituteur d'effort 3 est connecté à une unité de contrôle électronique 4 qui permet d'élaborer des consignes de freinage au système de freinage hydraulique 5 muni d'actionneurs et au système de traction électrique ou hybride 2.

Le véhicule 1 comprend en outre un système électronique de contrôle de la stabilité du véhicule.

La figure 2 décrit schématiquement les étapes d'un procédé de freinage au sein d'un véhicule automobile 1 selon l'invention.

Une première étape E01 d'élaboration d'une consigne de couple de la pédale c_pédale est mise en oeuvre à partir des informations relatives à la pédale de frein comme sa position ou l'effort exercé par le conducteur sur la pédale, recueillies par le restituteur d'effort 3. La consigne c_pédale correspond à une interprétation de la volonté du conducteur. Cette élaboration peut par exemple comprendre une cartographie du couple en fonction de la position de la pédale de frein.

Une étape E02 d'élaboration d'une consigne de couple relative à des systèmes d'aide à la conduite c_aides est mise en oeuvre simultanément à l'étape E01. Cette consigne est réalisée à partir d'une synthèse de l'ensemble des consignes de couple générée par les systèmes d'aide à la conduite comme par exemple un régulateur de vitesse adaptatif.

En outre, les informations reçues par les systèmes d'aide à la conduite peuvent être traitées au moyen de filtres.

Les deux consignes c_pédale et c_aides sont traitées lors d'une étape E03 de sélection qui fournit une consigne c_sel. Lors de cette étape, un arbitrage est mis en oeuvre entre les deux consignes. Par exemple, la valeur de la consigne la plus élevée peut être sélectionnée.

Une étape E04 d'élaboration d'une consigne c_sub de couple de freinage hydraulique est également mise en oeuvre. La consigne c_sub est indépendante de l'état de la pédale et est élaborée par le système de traction électrique ou hybride. La consigne c_sub correspond à la quantité de décélération non réalisable par le système de traction électrique ou hybride, de par ses qualités intrinsèques, mais également en fonction de l'état de charge des batteries. Ainsi, la consigne c_sub permet d'assurer un frein moteur répétable quel que soit la situation.

En plus des étapes E01, E02, et E03, une étape E05 est mise en oeuvre. Il s'agit d'une étape d'acquisition de données d_stabilité relatives à la stabilité du véhicule 1. Ces données d_stabilité proviennent d'un système électronique de contrôle de la stabilité du véhicule. Les données d_stabilité peuvent être par exemple fournies par un ensemble de capteurs aptes à évaluer la vitesse, l'accélération longitudinale, l'accélération latérale, et le taux de glissement des roues du véhicule. Les données de stabilité d_stabilité peuvent comprendre, de plus, des informations sur un système de régulation d'anti-blocage des freins, ou un système d'anti-patinage des roues.

Les consignes c_sel, c_sub et les données d_stabilité sont ensuite consolidées lors de l'étape E06. Cette étape correspond à une distribution des consignes de freinage hydrauliques et électriques, afin d'optimiser le freinage permettant la récupération d'énergie électrique tout en maintenant la stabilité du véhicule. Cette distribution permet d'assurer que le couple de freinage demandé est effectivement appliqué.

Cette étape E06 fournit ainsi une consigne de freinage hydraulique c_fr_hyd destinée au système de freinage hydraulique 5 et une consigne de freinage destinée au moteur électrique c_fr_elec qui permet la récupération d'énergie.

Sur la figure 3, on a représenté un autre mode de mise en oeuvre de l'invention. Les étapes et les consignes portant les même références numériques sont identiques à celles de la figure 2.

Une étape E07 d'élaboration d'une consigne de freinage d'urgence c_hba a été rajoutée. Cette consigne est ensuite traitée lors de l'étape E06 qui peut fournir une consigne c_fr_hyd correspondante à la consigne de freinage d'urgence c_hba.

Les étapes E01-E07 peuvent être mises en oeuvre au sein de l'unité de contrôle électronique 4.

On notera que le véhicule comporte d'autres organes qui n'ont pas été représentés pour des raisons de simplification.

Avec l'invention, on peut maximiser la récupération d'énergie lors du freinage, tout en limitant les risques d'instabilité du véhicule et en ayant la possibilité de procéder à un freinage efficace.

Par la présente invention, les stratégies de répartition du freinage entre freinage hydraulique et freinage électrique ne sont pas liées exclusivement au système électronique de contrôle de la stabilité du véhicule, en gérant, au sein d'un même calculateur, les différentes sources de consigne de décélération.

## Revendications

1. Procédé de freinage d'un véhicule automobile (1) équipé d'un système de traction électrique ou hybride (2), et comportant un système de freinage hydraulique (5), un système de freinage électrique permettant la récupération d'énergie électrique (5), une pédale de frein, des systèmes d'aide à la conduite du véhicule, un système électronique de contrôle de la stabilité du véhicule, **caractérisé en ce que** le procédé comprend les étapes suivantes :
- détermination d'une consigne de couple de la pédale (c_pédale) relative à la position ou l'effort exercé sur la pédale de frein,
- détermination d'une consigne de couple relative aux systèmes d'aide à la conduite (c_aides), lesdits systèmes d'aide à la conduite incluant un régulateur de vitesse adaptatif générant l'une des consignes de couple,
sélection d'une des consignes de couple entre une consigne de couple de la pédale (c_pédale) relative à la position ou l'effort exercé sur la pédale de frein et une consigne de couple relative aux systèmes d'aide à la conduite (c_aides),
- élaboration d'une consigne de couple de freinage hydraulique (c_sub) indépendante de l'état de la pédale par le système de traction électrique ou hybride,
- acquisition d'informations (d_stabilité) relatives à la stabilité du véhicule,
- élaboration d'une consigne de couple de freinage hydraulique (c_fr_hyd) et d'une consigne de couple de freinage électrique (c_fr_elec) destinée au système de traction électrique ou hybride (2) à partir de la consigne de couple sélectionnée (c_sel), de la consigne de couple de freinage hydraulique indépendante (c_sub) et des informations relatives à la stabilité du véhicule (d_stabilité).

2. Procédé selon la revendication 1, dans lequel on élabore une consigne de freinage d'urgence (c_hba) destinée au système électronique de contrôle de la stabilité du véhicule (1) à partir des informations relatives la position ou l'effort exercé sur la pédale de frein.

3. Procédé selon la revendication 1 ou 2, dans lequel la sélection de l'une des consignes de couple entre la consigne de couple de la pédale de frein (c_pédale) et la consigne de couple relative aux systèmes d'aide à la conduite (c_aides) comprend la sélection de la valeur de consigne la plus élevée.

4. Véhicule automobile (1) comprenant un système de traction électrique ou hybride (2), un système de freinage hydraulique (5), un système de freinage électrique permettant la récupération d'énergie électrique (2), une pédale de frein, des systèmes d'aide à la conduite du véhicule, un système électronique de contrôle de la stabilité du véhicule, et une unité de contrôle électronique (4), **caractérisé en ce que** ladite unité de contrôle électronique (4) comprend :
- des moyens de détermination d'une consigne de couple de la pédale (c_pédale) relative à la position ou l'effort exercé sur la pédale de frein,
- des moyens de détermination d'une consigne de couple relative aux systèmes d'aide à la conduite (c_aides), lesdits systèmes d'aide à la conduite incluant un régulateur de vitesse adaptatif générant l'une des consignes de couple,
- des moyens de sélection d'une des consignes de couple entre une consigne de couple de la pédale relative à la position ou l'effort exercé sur la pédale de frein (c_pédale) et une consigne de couple relative aux systèmes d'aide à la conduite (c_aides),
- des moyens d'élaboration d'une consigne de couple de freinage hydraulique indépendante de l'état de la pédale par le système de traction électrique ou hybride (c_sub),
- des moyens d'acquisition d'informations relatives à la stabilité du véhicule (d_stabilité),
- des moyens d'élaboration d'une consigne de couple de freinage hydraulique (c_fr_hyd) et d'une consigne de couple de freinage électrique (c_fr_elec) destinée au système de traction électrique ou hybride (2) à partir de la consigne de couple sélectionnée (c_sel), de la consigne de couple de freinage hydraulique indépendante (c_sub) et des informations relatives à la stabilité du véhicule (d_stabilité).

5. Véhicule automobile (1) selon la revendication 4, **caractérisé en ce que** l'unité de contrôle électronique (4) comprend des moyens d'élaboration d'une consigne de freinage d'urgence (c_hba) destinée au système électronique de contrôle de la stabilité du véhicule (1) à partir des informations relatives à la position ou l'effort exercé sur la pédale de frein.

6. Véhicule automobile selon la revendication 4 ou 5, **caractérisé en ce que** les moyens de sélection d'une des consignes de couple entre la consigne de couple de la pédale de frein (c_pédale) et la consigne de couple relative aux systèmes d'aide à la conduite (c_aide) comprennent des moyens de sélection de la valeur de consigne la plus élevée.

## Patentansprüche

1. Verfahren zum Bremsen eines Kraftfahrzeugs (1), das mit einem Elektro- oder Hybridantriebssystem (2) ausgestattet ist und ein hydraulisches Bremssystem (5), ein elektrisches Bremssystem, das elektrische Energie zurückgewinnen kann (5), ein Bremspedal, Fahrzeugfahrerassistenzsysteme, ein elektronisches System zur Steuerung der Fahrzeugstabilität umfasst, **dadurch gekennzeichnet, dass** das Verfahren die folgenden Schritte umfasst:
- Bestimmen eines Drehmoment-Sollwerts des Pedals (c_pedale) bezogen auf die Position oder die Kraft, die auf das Bremspedal ausgeübt wird,
- Bestimmen eines Drehmoment-Sollwerts bezogen auf Fahrerassistenzsysteme (c_aides), wobei die Fahrerassistenzsysteme einen adaptiven Geschwindigkeitsregler beinhalten, der einen der Drehmoment-Sollwerte erzeugt,
- Auswählen eines der Drehmoment-Sollwerte aus einem Drehmoment-Sollwert des Pedals (c_pédale), der sich auf die Position oder auf die Kraft, die auf das Bremspedal ausgeübt wird, bezieht, und einem Drehmoment-Sollwert, der sich auf die Fahrerassistenzsysteme (c_aides) bezieht,
- Entwickeln eines Drehmoment-Sollwerts der hydraulischen Bremse (c_sub), unabhängig vom Status des Pedals, durch das Elektro- oder Hybrid-Antriebssystem,
- Erfassen von Informationen (d_stabilité), die sich auf die Fahrzeugstabilität beziehen,
- Entwickeln eines Drehmoment-Sollwerts der hydraulischen Bremse (c_fr_hyd) und eines Drehmoment-Sollwerts der elektrischen Bremse (c_fr_elec), der für das Elektro- oder Hybridantriebssystem (2) bestimmt ist, aus dem ausgewählten Drehmoment-Sollwert (c_sel), aus dem unabhängigen Drehmoment-Sollwert der hydraulischen Bremse (c_sub) und aus Informationen, die sich auf die Fahrzeugstabilität beziehen (d_stabilité).

2. Verfahren nach Anspruch 1, wobei ein Notbremsungs-Sollwert (c_hba), der für das elektronische System zur Steuerung der Fahrzeugstabilität (1) bestimmt ist, aus Informationen entwickelt wird, die sich auf die Position oder die Kraft, die auf das Bremspedal ausgeübt wird, beziehen.

3. Verfahren nach Anspruch 1 oder 2, wobei das Auswählen eines der Drehmoment-Sollwerte aus dem Drehmoment-Sollwert des Bremspedals (c_pédale) und aus dem Drehmoment-Sollwert, der sich auf die Fahrerassistenzsysteme (c_aides) bezieht, das Auswählen des höchsten Sollwerts umfasst.

4. Kraftfahrzeug (1), das ein Elektro- oder Hybridantriebssystem (2), ein hydraulisches Bremssystem (5), ein elektrisches Bremssystem, das elektrische Energie zurückgewinnen kann (2), ein Bremspedal, Fahrzeugfahrerassistenzsysteme, ein elektronisches System zur Steuerung der Fahrzeugstabilität und eine elektronische Steuereinheit (4) umfasst, **dadurch gekennzeichnet, dass** die elektronische Steuereinheit (4) Folgendes umfasst:
- Einrichtungen zum Bestimmen eines Drehmoment-Sollwerts des Pedals (c_pédale), der sich auf die Position oder auf die Kraft, die auf das Bremspedal ausgeübt wird, bezieht,
- Einrichtungen zum Bestimmen eines Drehmoment-Sollwerts, der sich auf Fahrerassistenzsysteme (c_aides) bezieht, wobei die Fahrerassistenzsysteme einen adaptiven Geschwindigkeitsregler beinhalten, der einen der Drehmoment-Sollwerte erzeugt,
- Einrichtungen zum Auswählen eines der Drehmoment-Sollwerte aus einem Drehmoment-Sollwert des Pedals (c_pédale), der sich auf die Position oder auf die Kraft, die auf das Bremspedal ausgeübt wird, bezieht, und einem Drehmoment-Sollwert, der sich auf die Fahrerassistenzsysteme (c_aides) bezieht,
- Einrichtungen zum Entwickeln eines Drehmoment-Sollwerts der hydraulischen Bremse, unabhängig vom Status des Pedals durch das Elektro- oder Hybridantriebssystem (c_sub),
- Einrichtungen zum Erfassen von Informationen, die sich auf die Fahrzeugstabilität beziehen (d_stabilité),
- Einrichtungen zum Entwickeln eines Drehmoment-Sollwerts der hydraulischen Bremse (c_fr_hyd) und eines Drehmoment-Sollwerts der elektrischen Bremse (c_fr_elec), der für das Elektro- oder Hybridantriebssystem (2) bestimmt ist, aus dem ausgewählten Drehmoment-Sollwert (c_sel), aus dem unabhängigen Drehmoment-Sollwert der hydraulischen Bremse (c_sub) und aus Informationen, die sich auf die Fahrzeugstabilität beziehen (d_stabilité).

5. Kraftfahrzeug (1) nach Anspruch 4, **dadurch gekennzeichnet, dass** die Einheit zur elektronischen Steuerung (4) Einrichtungen zum Entwickeln eines Notbremsungs-Sollwerts (c_hba) umfasst, der für das elektronische System zur Steuerung der Fahrzeugstabilität (1) bestimmt ist, aus Informationen, die sich auf die Position oder die Kraft, die auf das Bremspedal ausgeübt wird, beziehen.

6. Kraftfahrzeug nach Anspruch 4 oder 5, **dadurch gekennzeichnet, dass** die Einrichtungen zum Auswählen eines der Drehmoment-Sollwerte aus dem Drehmoment-Sollwert des Bremspedals (c_pédale) und aus dem Drehmoment-Sollwert, der sich auf die Fahrerassistenzsysteme (c_aide) bezieht, Einrichtungen zum Auswählen des höchsten Sollwerts umfassen.

## Claims

1. Method of braking a motor vehicle (1) fitted with an electric or hybrid propulsion system (2), and including a hydraulic braking system (5), an electric braking system allowing the recovery of electrical energy (5), a brake pedal, vehicle driver assistance systems, and an electronic vehicle stability control system, **characterized in that** the method comprises the following steps:
- determining a torque setpoint for the pedal (c_pédale) relating to the position or the force exerted on the brake pedal,
- determining a torque setpoint relating to the driver assistance systems (c_aides), said driver assistance systems including an adaptive speed regulator that generates one of the torque setpoints,
- selection of one torque setpoint from between a pedal torque setpoint (c_pédale) relating to the position or the force exerted on the brake pedal and a torque setpoint relating to the driver assistance systems (c_aides),
- formulation of a hydraulic braking torque setpoint (c_sub), independent of the state of the pedal, by means of the electric or hybrid propulsion system,
- acquisition of data (d_stabilité) relating to the stability of the vehicle,
- formulation of a hydraulic braking torque setpoint (c_fr_hyd) and an electric braking torque setpoint (c_fr_elec) intended for the electric or hybrid propulsion system (2), on the basis of the selected torque setpoint (c_sel), the independent hydraulic braking torque setpoint (c_sub) and the data relating to the stability of the vehicle (d_stabilité).

2. Method according to Claim 1, wherein an emergency braking setpoint (c_hba) is formulated, this setpoint being intended for the electronic vehicle stability control system (1), on the basis of the data relating to the position or the force exerted on the brake pedal.

3. Method according to Claim 1 or 2, wherein the selection of one torque setpoint from between the brake pedal torque setpoint (c_pédale) and the torque setpoint relating to the driver assistance systems (c_aides) comprises the selection of the higher setpoint value.

4. Motor vehicle (1) comprising an electric or hybrid propulsion system (2), a hydraulic braking system (5), an electric braking system allowing the recovery of electrical energy (2), a brake pedal, vehicle driver assistance systems, an electronic vehicle stability control system, and an electronic control unit (4), **characterized in that** said electronic control unit (4) comprises:
- means for determining a torque setpoint for the pedal (c_pédale) relating to the position or the force exerted on the brake pedal,
- means for determining a torque setpoint relating to the driver assistance systems (c_aides), said driver assistance systems including an adaptive speed regulator that generates one of the torque setpoints,
- means for selecting one torque setpoint from between a pedal torque setpoint relating to the position or the force exerted on the brake pedal (c_pédale) and a torque setpoint relating to the driver assistance systems (c_aides),
- means for formulating a hydraulic braking torque setpoint, independent of the state of the pedal, using the electric or hybrid propulsion system (c_sub),
- means for acquiring data relating to the stability of the vehicle (d_stabilité),
- means for formulating a hydraulic braking torque setpoint (c_fr_hyd) and an electric braking torque setpoint (c_fr_elec) intended for the electric or hybrid propulsion system (2), on the basis of the selected torque setpoint (c_sel), the independent hydraulic braking torque setpoint (c_sub) and the data relating to the stability of the vehicle (d_stabilité).

5. Motor vehicle (1) according to Claim 4, **characterized in that** the electronic control unit (4) comprises means for formulating an emergency braking setpoint (c_hba), intended for the electronic vehicle stability control system (1), on the basis of the data relating to the position or the force exerted on the brake pedal.

6. Motor vehicle according to Claim 4 or 5, wherein the means for selecting one torque setpoint from between the brake pedal torque setpoint (c_pédale) and the torque setpoint relating to the driver assistance systems (c_aide) comprise means for selecting the higher setpoint value.
